# EUROPEAN PATENT APPLICATION

(11) **EP 4 439 519 A1**
(43) Date of publication of application: **02.10.2024**
(21) Application number: 23166212.3
(22) Date of filing: 31.03.2023
(51) Int. Cl.: G08G 1/01, B60W 60/00, G05D 1/00, G08G 1/0968, G08G 1/16

(54) **METHOD FOR OPERATING A VEHICLE BEING CONFIGURED FOR DRIVING IN AN AUTONOMOUS DRIVE MODE, METHOD FOR CONTROLLING A VEHICLE BEING SUBJECT TO AN INTERRUPTED AUTONOMOUS DRIVE MODE, METHOD FOR PROVIDING A DRIVING RECORD BY A VEHICLE, DATA PROCESSING APPARATUS, COMPUTER PROGRAM, COMPUTER-READABLE STORAGE MEDIUM, AND TRAFFIC SYSTEM**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method for operating a vehicle (22) being configured for driving in an autonomous drive mode. The method comprises receiving an autonomous drive mode interruption notification or determining an autonomous drive mode interruption event. Furthermore, the method comprises receiving occupancy data describing a presence or absence of a human driver in the autonomous vehicle (22). Moreover, the method comprises requesting at least one driving record (R1) from a central control entity (36), if the occupancy data describes an absence of a human driver. Additionally, the method comprises receiving at least one driving record (R1) from the central control entity (36) and triggering reproduction of the at least one driving record (R1). The disclosure further relates to a method for controlling a vehicle (22) being subject to an interrupted autonomous drive mode. Furthermore, the disclosure relates to a method for providing a driving record (R1) by a vehicle (50, 64). The disclosure is additionally directed to a data processing apparatus (20, 34, 48, 62), a computer program (30, 44, 58, 72), and a computer-readable storage medium (28, 42, 56, 70). Additionally, the disclosure relates to a traffic system (18).

## Description

The present disclosure relates to a method for operating a vehicle being configured for driving in an autonomous drive mode.

The present disclosure also is directed to a method for controlling a vehicle being subject to an interrupted autonomous drive mode.

Additionally, the present disclosure is directed to a method for providing a driving record by a vehicle.

Furthermore, the present disclosure is directed to a data processing apparatus, a computer program, and a computer-readable storage medium.

Moreover, the present disclosure relates to a traffic system.

A vehicle which is configured for driving in an autonomous drive mode may as well be called an autonomous vehicle.

For such a vehicle, a situation may occur in which an execution of the autonomous drive mode is not possible anymore. This may be due to changes in the environment of the autonomous vehicle, such as a construction site, an accident or a weather condition. Additionally or alternatively it may not be possible to execute an autonomous drive mode in case of a malfunction or a lack of connectivity of the autonomous vehicle. It is obvious that in such a situation the safety of the autonomous vehicle and the safety of other traffic participants needs to be ensured.

It is an objective of the present disclosure to provide a solution for a situation in which an autonomous vehicle may not use the autonomous drive mode.

The problem is at least partially solved or alleviated by the subject matter of the SE:TOP
independent claims of the present disclosure, wherein further examples are incorporated in the dependent claims.

According to a first aspect, there is provided a method for operating a vehicle being configured for driving in an autonomous drive mode. The method comprises:
- receiving an autonomous drive mode interruption notification or determining an autonomous drive mode interruption event, the autonomous drive mode interruption notification or the autonomous drive mode interruption event comprising drive mode status data describing that the autonomous drive mode of the autonomous vehicle will be interrupted and at least one of interruption position data describing a position at which the autonomous drive mode will be interrupted and interruption time data describing a time at which the autonomous drive mode will be interrupted,
- receiving occupancy data describing a presence or absence of a human driver in the autonomous vehicle,
- requesting at least one driving record from a central control entity, if the occupancy data describes an absence of a human driver, the driving record being associated with at least one of the position described by the interruption position data and the time described by the interruption time data, and
- receiving at least one driving record from the central control entity, and
- triggering reproduction of the at least one driving record when reaching the position described by the interruption position data or when reaching the time described by the interruption time data.

The present method is started in a situation in which the vehicle is driving in an autonomous driving mode. Following the received autonomous drive mode interruption notification or the determined autonomous drive mode interruption event, it is known that at a future point in time or at a future position, the autonomous driving mode will not be able to be executed anymore. Based on the received occupancy data, it is known whether a human driver is present in the autonomous vehicle or not. In case a human driver is present, the method may be abandoned. In such a case, the human driver can take over the control of the vehicle. It is noted that in this context not every human being is a human driver. Only human beings which are able to manually drive the vehicle are considered human drivers. For example, young children or elderly people may not be able to manually drive the vehicle. Of course, it is also possible that the vehicle is empty, i.e. that no occupant at all is present in the vehicle. In a case in which no human driver is present in the vehicle, the vehicle can continue driving by reproducing the at least one driving record. Consequently, even in a situation in which no human driver is present in the autonomous vehicle, the autonomous vehicle can continue driving in a safe manner. This enhances the safety of the autonomous vehicle itself and the safety of other road users.

In an example, the occupancy information comprises seat belt sensor data being indicative of a use of a seat belt to which the seat belt sensor is associated. Additionally or alternatively, the occupancy information comprises weight data being provided by a weight sensor of a seat of the autonomous vehicle. Thus, if the seat belt sensor data indicates a use of the associated seatbelt, the method infers that an occupant is using this seatbelt. Additionally or alternatively, a weight of a user of a seat indicates the presence or absence of an occupant. Furthermore, the weight data may indicate different weights such that it is possible to distinguish between adults and children. Consequently, a presence or absence of a human driver may be determined with high precision.

In another example, the occupancy information comprises image data comprising a representation of an interior of the vehicle. The image data may be video data. An object detection technique may be applied to the image data such that occupants may be detected therein and a number of occupants may be determined. Moreover, based on the image data, an age may be estimated for each occupant. Thus, one may reliably determine the presence or absence of a human driver.

According to an example, receiving at least one driving record from the central control entity comprises receiving a plurality of alternative driving records. All driving records are associated with at least one of the position described by the interruption position data and the time described by the interruption time data. In other words, a choice of driving records is provided. Consequently, the most appropriate driving record may be selected for reproduction. By using the most appropriate driving record for reproduction, the autonomous vehicle is able to drive in an appropriate manner. This further enhances road safety for both the autonomous vehicle and other road users.

In an example, the method further comprises selecting one driving record out of the plurality of alternative driving records and triggering reproduction of the selected driving record. The selection may be based on a property of the autonomous vehicle or on a property of the environment of the autonomous vehicle. Additionally or alternatively, the selection may be based on a property of the driving record. It is noted that in any case, the selection is terminated before the autonomous vehicle reaches the position described by the interruption position data and/or the time described by the interruption time data. Consequently, the autonomous vehicle is able to smoothly transition from the autonomous drive mode into the reproduction of the selected driving record.

In an example, the selected driving record is selected as a function of the received occupancy data. In this context, at least one property of each driving record needs to be considered. For example, a maximum acceleration and/or a difference between a maximum speed and a minimum speed may be used as an indicator of comfort. An average driving speed may be used as an indicator of efficiency. As has been mentioned before, based on the occupancy data, one may determine whether at least one of the occupants is a child or an elder person. In such a case, the most comfortable driving record may be selected. Otherwise, the most efficient driving record may be selected. Altogether, a driving record which is appropriate for the occupants may be selected.

In an example, selecting one driving record comprises selecting one or more driving records which have led to an availability of the autonomous drive mode. In this example, one property of the driving record describes the fact whether this driving record comprises a takeover of the autonomous driving mode. In other words, the property of the driving record describes whether the associated vehicle could drive in the autonomous driving mode again. Selecting such a driving record allows to put the autonomous vehicle in a situation in which it can drive again in the autonomous driving mode. In a case in which a plurality of driving records have led to the availability of the autonomous driving mode, the driving record having led to the availability of the autonomous driving mode in the quickest manner may be selected. This enhances road safety.

In an example, the driving record comprises historic driving action data and/or historic driving characteristic data having been produced by a human driver. In this context, historic driving action data describes driving actions that have been performed by a human driver in a past time. Examples of driving actions are steering actions, acceleration actions and deceleration actions. Historic driving characteristic data describe the driving characteristic of the human driver from a past time. This may for example be done by historic speed data and/or historic acceleration data. Examples of historic speed data include a historic minimum speed, a historic maximum speed and a historic average speed. Examples of historic acceleration data includes a historic maximum acceleration, a historic minimum acceleration and a historic average acceleration. Thus, the historic driving action data and/or the historic driving characteristic data provide a good basis to select an appropriate driving record to be reproduced.

In an example, the method further comprises
- receiving an autonomous drive mode availability notification or determining an autonomous drive mode availability event, the autonomous drive mode availability notification or the autonomous drive mode availability event comprising drive mode status data describing that the autonomous drive mode of the autonomous vehicle will be available and at least one of availability position data describing a position at which the autonomous drive mode will be available and availability time data describing a time at which the autonomous drive mode will be available, and
- abandoning the method.

Thus, the method is able to determine a location or at time at which the use of the autonomous drive mode is possible again. In such a situation, the autonomous drive mode will be used and the present method can be abandoned.

According to a second aspect, there is provided a method for controlling a vehicle being subject to an interrupted autonomous drive mode. The autonomous drive mode is interrupted at a position described by interruption position data or at a time described by interruption time data. The method comprises:
- receiving a request for at least one driving record from the vehicle, the driving record being associated with at least one of the position described by the interruption position data and the time described by the interruption time data, and
- providing at least one driving record to the vehicle.

Thus, this method is able to help an autonomous vehicle in a situation in which it cannot use the autonomous drive mode anymore. This is of particular relevance in a case in which no human driver is present in the autonomous vehicle. Due to the provided driving record, the autonomous vehicle is able to continue driving even though the autonomous drive mode may not be used. A safety stopping maneuver is not necessary. This enhances road safety since traffic flow is not affected or only affected to a very little extent.

In an example, the method further comprises receiving at least one driving record from an auxiliary vehicle. The driving record comprises at least one of historic driving action data and historic driving characteristic data having been produced by a human driver of the auxiliary vehicle, and storing the driving record. Thus, using this method, driving records can be collected and stored such that upon request of an autonomous vehicle which is not able to use the autonomous drive mode anymore, an appropriate driving record can be provided.

According to a third aspect, there is provided a method for providing a driving record by a vehicle. The method comprises
- determining whether the vehicle is operated by a human driver,
- capturing at least one of driving action data and driving characteristic data, if the vehicle is operated by a human driver,
- consolidating the at least one of driving action data and driving characteristic data in a driving record, and
- providing the driving record to a central control entity.

Since the driving records help other vehicles, the vehicle may be called an auxiliary vehicle. In other words, the driving of human drivers is recorded and made available on a central control entity. Consequently, the recorded driving can be used by autonomous vehicles which are in a situation in which the autonomous drive mode cannot be used. Reference is made to the above explanations. Thus, providing the driving records on the central control entity enhances road safety.

In an example, the driving characteristic data comprises at least one of location data describing a location of the vehicle, speed data describing a speed of the vehicle and acceleration data describing an acceleration of the vehicle. The location data may comprise an identifier of a lane on which the vehicle is driving. These data may be provided as a function of time or as a function of a position. In other words, the driving characteristic data may be provided as a driving profile. For each of the mentioned driving characteristics, minimum values, maximum values and/or average values may be provided.

Additionally or alternatively, the driving characteristic data may comprise a recordation stop indicator describing a reason why the recording has been stopped. For example, the recordation stop indicator describes the fact that an autonomous driving mode has been available.

In an example, the driving characteristic data comprises a maximum acceleration of 5m/s2, a maximum speed of 80km/h, a braking event after 400 meters distance, a number of lane changes performed equaling two and a recordation stop indicator referring to the availability of an autonomous driving mode at a distance of 1km. The record may cover a time of 30 seconds.

In another example, the driving characteristic data comprises a maximum acceleration of 1m/s2, a maximum speed of 40km/h, a braking event after 200 meter, a number of lane changes equaling one, a recordation duration of 1 minute and a distance traveled of 300 meters, and a recordation stop indicator referring to the availability of an autonomous driving mode.

In an example, the method further comprises abandoning the method after a predefined recording time, after a predefined recording distance, after receiving an autonomous drive mode availability notification or after determining an autonomous drive mode availability event. For example, the method may be abandoned after 5 minutes or after a travelled distance of 10 km. It is noted that receiving the autonomous drive mode availability notification or determining the autonomous drive mode availability event does not mean that the vehicle effectively goes back to the autonomous drive mode, it means that this is possible if the driver decides accordingly. Consequently, a size of the driving records is limited. This allows to store and use the driving records in an efficient manner.

The methods of the present disclosure may be at least partly computer-implemented, and may be implemented in software or in hardware, or in software and hardware. Further, the methods may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a fourth aspect, there is provided a data processing apparatus comprising means for carrying out at least one of the methods of the present disclosure. Thus, the data processing apparatus may be configured in accordance with several alternatives. In a first alternative, the data processing apparatus comprises means for carrying out the method for operating a vehicle being configured for driving in an autonomous drive mode. In a second alternative, the data processing apparatus comprises means for carrying out the method for controlling a vehicle being subject to an interrupted autonomous drive mode. In a third alternative, the data processing apparatus comprises means for carrying out the method for providing a driving record by a vehicle. In a fourth alternative, the data processing apparatus comprises means for carrying out two out of these methods. In a fifth alternative, the data processing apparatus comprises means for carrying out all three of these methods. Using such a data processing apparatus, an autonomous vehicle can continue driving in a safe manner even if it is in a situation in which the autonomous driving mode cannot be used. This enhances the safety of the autonomous vehicle itself and the safety of other road users.

According to a fifth aspect, there is provided a computer program comprising instructions which, when the computer program is executed by a computer, cause the computer to carry out at least one of the methods of the present disclosure. Thus, the computer program may be configured in accordance with several alternatives. In a first alternative, the computer program comprises instructions which cause the computer to carry out the method for operating a vehicle being configured for driving in an autonomous drive mode. In a second alternative, the computer program comprises instructions which cause the computer to carry out the method for controlling a vehicle being subject to an interrupted autonomous drive mode. In a third alternative, the computer program comprises instructions which cause the computer to carry out the method for providing a driving record by a vehicle. In a fourth alternative, the computer program comprises instructions which cause the computer to carry carrying out two out of these methods. In a fifth alternative, the computer program comprises instructions which cause the computer to carry out all three of these methods. Using such a computer program, an autonomous vehicle can continue driving in a safe manner even if it is in a situation in which the autonomous driving mode cannot be used. This enhances the safety of the autonomous vehicle itself and the safety of other road users.

According to a sixth aspect, there is provided a computer-readable storage medium comprising instructions which, when executed by a computer, cause the computer to carry out at least one of the methods of the present disclosure. Thus, the computer-readable storage medium may be configured in accordance with several alternatives. In a first alternative, the computer-readable storage medium comprises instructions which cause the computer to carry out the method for operating a vehicle being configured for driving in an autonomous drive mode. In a second alternative, the computer-readable storage medium comprises instructions which cause the computer to carry out the method for controlling a vehicle being subject to an interrupted autonomous drive mode. In a third alternative, the computer-readable storage medium comprises instructions which cause the computer to carry out the method for providing a driving record by a vehicle. In a fourth alternative, the computer-readable storage medium comprises instructions which cause the computer to carry carrying out two out of these methods. In a fifth alternative, the computer-readable storage medium comprises instructions which cause the computer to carry out all three of these methods. Using such a computer-readable storage medium, an autonomous vehicle can continue driving in a safe manner even if it is in a situation in which the autonomous driving mode cannot be used. This enhances the safety of the autonomous vehicle itself and the safety of other road users.

According to a seventh aspect, there is provided a traffic system. The traffic system comprises
- a data processing apparatus comprising means for carrying out the method for operating a vehicle being configured for driving in an autonomous drive mode according to the present disclosure,
- a data processing apparatus comprising means for carrying out the method for controlling a vehicle being subject to an interrupted autonomous drive mode according to the present disclosure, and
- a data processing apparatus comprising means for carrying out the method for providing a driving record according to the present disclosure.

In such a traffic system, an autonomous vehicle can continue driving in a safe manner even if it is in a situation in which the autonomous driving mode cannot be used. This enhances the safety of the autonomous vehicle itself and the safety of other road users.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.

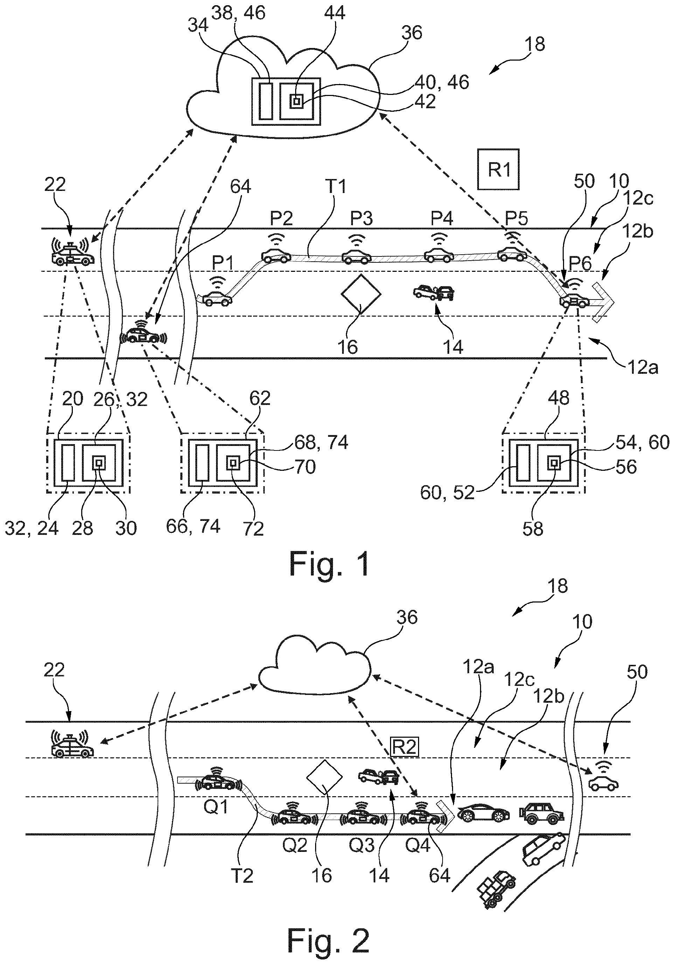

- Figure 1: shows a road segment on which an accident has happened at a first point in time and a traffic system according to the present disclosure, wherein the traffic system comprises a data processing apparatus according to the present disclosure comprising means for carrying out a method according to the present disclosure for operating a vehicle being configured for driving in an autonomous drive mode, a data processing apparatus according to the present disclosure comprising means for carrying out a method according to the present disclosure for controlling a vehicle being subject to an interrupted autonomous drive mode, and a data processing apparatus according to the present disclosure comprising means for carrying out a method according to the present disclosure for providing a driving record,
- Figure 2: shows the road segment and the traffic system of Figure 1 at a second point in time, and
- Figure 3: shows the road segment and the traffic system of Figures 1 and 2 at a third point in time.

The Figures are merely schematic representations and serve only to illustrate examples of the disclosure. Identical or equivalent elements are in principle provided with the same reference signs.

Figure 1 shows a segment of a road 10. The road 10 comprises three lanes 12a, 12b, 12c which all go into one direction.

An accident 14 has happened on the middle lane 12b. This leads to the fact that the middle lane 12b is closed. This is symbolized by a traffic sign 16.

Moreover, Figure 1 shows a traffic system 18.

The traffic system 18 comprises a data processing apparatus 20 which is installed in a vehicle 22.

The data processing apparatus 20 comprises a data processing unit 24 and a data storage unit 26.

The data storage unit 26 comprises a computer-readable storage medium 28. On the computer-readable storage medium 28, i.e. also on the data storage unit 26, there is provided a computer program 30.

The computer-readable storage medium 28 and the computer program 30 comprise instructions which, when the computer program 30 is executed by the data processing unit 24 or, more generally, a computer, cause the data processing unit 24 or the computer to carry out a method for operating a vehicle being configured for driving in an autonomous drive mode.

Consequently, the data processing unit 24 and the data storage unit 26 form means 32 for carrying out the method for operating a vehicle being configured for driving in an autonomous drive mode.

The traffic system 18 also comprises a data processing apparatus 34 which is installed in a central control entity 36.

The data processing apparatus 34 comprises a data processing unit 38 and a data storage unit 40.

The data storage unit 40 comprises a computer-readable storage medium 42. On the computer-readable storage medium 42, i.e. also on the data storage unit 40, there is provided a computer program 44.

The computer-readable storage medium 42 and the computer program 44 comprise instructions which, when the computer program 44 is executed by the data processing unit 38 or, more generally, a computer, cause the data processing unit 38 or the computer to carry out a method for controlling a vehicle being subject to an interrupted autonomous drive mode.

Consequently, the data processing unit 38 and the data storage unit 40 form means 46 for carrying out the method for controlling a vehicle being subject to an interrupted autonomous drive mode.

Furthermore, the traffic system 18 comprises a data processing apparatus 48 which is installed in another vehicle 50. For the ease of explanation, the vehicle 50 will be called a first auxiliary vehicle 50 in the following.

The data processing apparatus 48 comprises a data processing unit 52 and a data storage unit 54.

The data storage unit 54 comprises a computer-readable storage medium 56. On the computer-readable storage medium 56, i.e. also on the data storage unit 54, there is provided a computer program 58.

The computer-readable storage medium 56 and the computer program 58 comprise instructions which, when the computer program 58 is executed by the data processing unit 52 or, more generally, a computer, cause the data processing unit 52 or the computer to carry out a method for providing a driving record by a vehicle.

Consequently, the data processing unit 52 and the data storage unit 54 form means 60 for carrying out the method for providing a driving record by a vehicle.

Additionally, the traffic system 18 comprises a data processing apparatus 62 which is installed in a further vehicle 64. For the ease of explanation, the further vehicle 64 will be called a second auxiliary vehicle 64 in the following.

The data processing apparatus 62 is similar to the data processing apparatus 48 and comprises a data processing unit 66 and a data storage unit 68.

The data storage unit 68 comprises a computer-readable storage medium 70. On the computer-readable storage medium 70, i.e. also on the data storage unit 68, there is provided a computer program 72.

The computer-readable storage medium 70 and the computer program 72 comprise instructions which, when the computer program 72 is executed by the data processing unit 66 or, more generally, a computer, cause the data processing unit 66 or the computer to carry out a method for providing a driving record by a vehicle.

Consequently, also the data processing unit 66 and the data storage unit 68 form means 74 for carrying out the method for providing a driving record by a vehicle.

In the traffic system 18, the data processing apparatus 20 and the data processing apparatus 34 are communicatively connected via a wireless data connection.

In the same manner, the data processing apparatus 48 and the data processing apparatus 34 are communicatively connected via a wireless data connection.

Moreover, the data processing apparatus 62 and the data processing apparatus 34 are communicatively connected via a wireless data connection. These wireless data connections are indicated by dotted arrows in Figure 1.

Figure 1 further shows a first trajectory T 1 which is a trajectory of the first auxiliary vehicle 50.

The first auxiliary vehicle 50 is driving around the accident 14 along the first trajectory T1. For the ease of explanation, the first auxiliary vehicle 50 is represented several times on the first trajectory T1 even though it is clear that at each point in time, the first auxiliary vehicle 50 can only be in one single location.

When driving around the accident 14, the first auxiliary vehicle 50, more precisely the means 60 for carrying out the method for providing a driving record by a vehicle execute a method for providing a driving record by a vehicle.

In the following, this method will be explained and the steps of this method will be designated by S1x.

In a first step S11, it is determined that the vehicle, it in the present example the first auxiliary vehicle 50 is operated by a human driver. This is the case when the first auxiliary vehicle 50 reaches position P1 since at this position, an autonomous driving mode of the first auxiliary vehicle 50 is not available anymore since the autonomous driving mode is not able to handle the situation generated by the accident 14.

Thus, at the position P1, the human driver who is present in the first auxiliary vehicle 50 takes over the control of the first auxiliary vehicle 50.

In a second step S12, driving action data and driving characteristic data is captured while the first auxiliary vehicle 50 is controlled by the human driver.

In the present example, at each of the positions being indicated by P1 to P6 in Figure 1, a current position of the first auxiliary vehicle 50, a current speed and a current acceleration is captured.

Moreover, driving actions of the human driver, such as turning the steering wheel, operating the brake pedal and operating the accelerator pedal are recorded.

Thereafter, in a third step S13, the driving action data and the driving characteristic data is consolidated in a first driving record R1.

When consolidating the driving action data and the driving characteristic data, also higher level driving characteristic data may be generated such as an maximum acceleration, a maximum speed and a number of lane changes.

In the present example, the data processing apparatus 48 of the first auxiliary vehicle 50 receives a drive mode availability notification at position P6. This means that starting from this position, the autonomous driving mode of the first auxiliary vehicle 50 is available again. Consequently, the method for providing a driving record by the vehicle is abandoned.

In a subsequent fourth step S14, the first driving record R1 is provided to the central control entity 36 via the wireless data connection.

In the present example, the first driving record covers a distance of 1 km and a time of 30 seconds. Moreover, an indicator describing that the method for providing a driving record has been abandoned due to the fact that it was possible to drive using the autonomous driving mode forms part of the first record R1.

While the data processing apparatus 48 of the first auxiliary vehicle 50 performs the method for providing a driving record R1, the vehicle 22 and the second auxiliary vehicle 64 are operated using a respective autonomous driving mode. This means that the vehicle 22 and the second auxiliary vehicle 64 are driving in an autonomous manner.

Figure 2 shows the same road 10 and the same traffic system 18 at a second point in time. Due to the fact that the traffic system 18 is the same as in Figure 1, details of the traffic system 18 are not repeated in Figure 2.

At the second point in time, the first auxiliary vehicle 50 has already passed the accident 14 and is traveling in an autonomous driving mode.

The vehicle 22 has not yet reached the location of the accident 14 and is also driving in an autonomous driving mode.

The second auxiliary vehicle 64 is driving around the accident 14 along a second trajectory T2. For the ease of explanation, the second auxiliary vehicle 64 is represented several times on the second trajectory T2 even though it is clear that at each point in time, the second auxiliary vehicle 64 can only be in one single location.

When driving around the accident 14, the second auxiliary vehicle 64, more precisely the means 74 for carrying out the method for providing a driving record by a vehicle execute a method for providing a driving record by a vehicle.

In the following, this method will be explained. Since this method is the same that has already been explained in connection with the first auxiliary vehicle 50, the steps of this method will again be designated by S1x.

In a first step S11, it is determined that the vehicle, it in the present example the second auxiliary vehicle 64 is operated by a human driver. This is the case when the second auxiliary vehicle 64 reaches position Q1 since at this position, an autonomous driving mode of the second auxiliary vehicle 64 is not available anymore since the autonomous driving mode is not able to handle the situation generated by the accident 14.

Thus, at the position Q1, the human driver who is present in the second auxiliary vehicle 64 takes over the control of the second auxiliary vehicle 64.

In a second step S12, driving action data and driving characteristic data are captured while the second auxiliary vehicle 64 is controlled by the human driver.

In the present example, at each of the positions being indicated by Q1 to Q4 in Figure 2, a current position of the second auxiliary vehicle 64, a current speed and a current acceleration is captured.

Moreover driving actions of the human driver, such as turning the steering wheel, operating the brake pedal and operating the accelerator pedal are recorded.

It is noted that the second trajectory T2 is different from the first trajectory T1.

Thereafter, in a third step S13, the driving action data and the driving characteristic data is consolidated in a second driving record R2.

When consolidating the driving action data and a driving characteristic data, also higher level driving characteristic data may be generated such as a maximum acceleration, a maximum speed and a number of lane changes.

In the present example, the method for providing a driving record by the vehicle is abandoned after one minute.

The second driving record R2 is provided to the central control entity 36 via the wireless data connection.

In the present example, the second driving record R2 covers a distance of 300 m and a time of 1 minute. Moreover, an indicator describing that the method for providing a driving record has been abandoned due to the lapse of one minute forms part of the second record R2.

Consequently, on the central control entity 36 the first driving record R1 and the second driving record R2 are available.

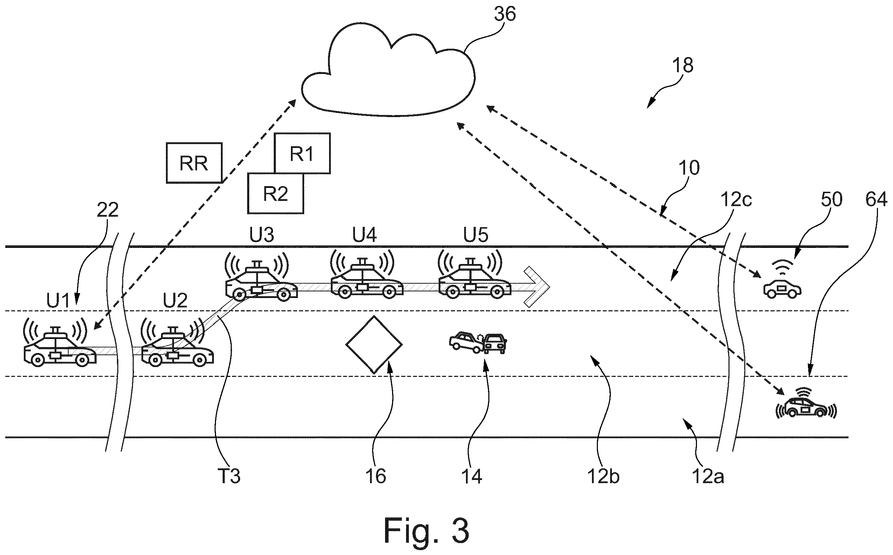

Figure 3 shows the same road 10 and the same traffic system 18 at a third point in time. Due to the fact that the traffic system 18 is the same as in Figures 1 and 2, details of the traffic system 18 are not repeated in Figure 3.

At the third point in time, the first auxiliary vehicle 50 and the second auxiliary vehicle 64 have already passed the accident 14 and are traveling in an autonomous driving mode.

The vehicle 22 is driving around the accident 14 along a third trajectory T3. For the ease of explanation, the vehicle 22 is represented several times on the third trajectory T3 even though it is clear that at each point in time, the vehicle 22 can only be in one single location.

In doing so, the method for operating a vehicle 22 being configured for driving in an autonomous drive mode and the method for controlling a vehicle 22 being subject to an interrupted autonomous drive mode are used. In the following, the steps of the method for operating a vehicle 22 being configured for driving in an autonomous drive mode will be designated by S2x and the steps of the method for controlling a vehicle 22 being subject to an interrupted autonomous drive mode will be designated by S3x. As has been mentioned before, the method for operating a vehicle 22 being configured for driving in an autonomous drive mode is executed by means 32 and the method for controlling a vehicle 22 being subject to an interrupted autonomous drive mode is executed by means 46.

When performing the method for operating a vehicle 22 being configured for driving in an autonomous driving mode, an autonomous drive mode interruption notification is received in a first step S21.

This notification may be received from an autonomous driving unit of the vehicle 22. The autonomous drive mode interruption notification comprises drive mode status data describing that the autonomous drive mode of the autonomous vehicle 22 will be interrupted and interruption position data describing a position at which the autonomous drive mode will be interrupted.

In the present example, the autonomous drive mode interruption notification is received when the autonomous vehicle 22 is in the location U1. The interruption position data relates to position U2. Thus, from position U2 onwards, the autonomous driving mode is not available anymore. In the present example, this is due to the lane closure following the accident 14.

In a second step S22, occupancy data is received at the data processing apparatus 20. The occupancy data describes a presence or absence of a human driver in the autonomous vehicle 22.

In the present example it is assumed that the vehicle 22 is empty, i.e. no occupant is present in the vehicle 22.

Subsequently, in a third step S23, a driving record R1, R2 is requested from the central control entity 36.

The requested driving record R1, R2 needs to be associated with the position described by the interruption position data, such that the vehicle 22 can use the driving record R1, R2 for further traveling along the third trajectory T3 beyond position U2 as will be explained in more detail further below.

The request RR is transmitted to the central control entity 36 via the wireless data connection.

As has been mentioned before, the means 46 carry out a method for controlling a vehicle 22 being subject to an interrupted autonomous drive mode. This method is carried out in parallel to the method for operating a vehicle 22 being configured for driving in an autonomous drive mode.

Thus, in a first step S31, the request RR is received from the vehicle 22.

In response thereto, in a second step S32, the two driving records R1, R2 are provided to the vehicle 22 via the wireless data connection.

Subsequently, in a fourth step S24, the two driving records R1, R2 are received at the data processing apparatus 20. As has been mentioned before in connection with the first auxiliary vehicle 50 and the second auxiliary vehicle 64, both the driving records R1, R2 comprise historic driving action data and/or historic driving characteristic data having been produced by a human driver.

More generally speaking, a plurality of alternative driving records R1, R2 is received.

All the driving records R1, R2 are associated with the position U2 described by the interruption position data. This means that all the driving records R1, R2 at least partially covered the position U2.

Thereafter, in a fifth step S25, one driving record out of the driving records R1, R2 is selected.

In the present example, driving record R1 is selected since driving record R1 has led to an availability of the autonomous drive mode. This is not the case for driving record R2.

It is noted that alternatively or additionally, other selection criteria may be applied. In a case in which occupants are located in the vehicle 22, the driving record R1, R2 may as well be selected as a function of the received occupancy data.

Then, in a sixth step S26, the reproduction of the driving record R1 is triggered. This means that the vehicle 22 uses the speed data and acceleration data for each of the positions P1 to P6 as reference data for its autonomous driving system. In simplified words, the vehicle 22 may drive around the accident 14 in the same manner as the human driver of the first auxiliary vehicle 50 has driven around the accident 14.

This is done starting from the position U2 at which the autonomous drive mode is not available anymore.

In the example of Figure 3, the data processing apparatus 20 receives an autonomous drive mode availability notification from the autonomous driving unit of the vehicle 22 when the vehicle 22 is at position U5.

The autonomous drive mode availability notification comprises drive mode status data describing that the autonomous drive mode of the autonomous vehicle 22 is available and availability position data describing a position at which the autonomous drive mode is available. In the present example, the availability position data relates to position U5.

Thus, at position U5 the vehicle 22 stops reproducing the driving record R1 and the autonomous drive mode takes over control of the vehicle to 22.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: road
- 12a: lane
- 12b: lane
- 12c: lane
- 14: accident
- 16: traffic sign
- 18: traffic system
- 20: data processing apparatus
- 22: vehicle
- 24: data processing unit
- 26: data storage unit
- 28: computer-readable storage medium
- 30: computer program
- 32: means for carrying out a method for operating a vehicle being configured for driving in an autonomous drive mode
- 34: data processing apparatus
- 36: central control entity
- 38: data processing unit
- 40: data storage unit
- 42: computer-readable storage medium
- 44: computer program
- 46: means for carrying out a method for controlling a vehicle being subject to an interrupted autonomous drive mode
- 48: data processing apparatus
- 50: first auxiliary vehicle
- 52: data processing unit
- 54: data storage unit
- 56: computer-readable storage medium
- 58: computer program
- 60: means for carrying out the method for providing a driving record by a vehicle
- 62: data processing apparatus
- 64: second auxiliary vehicle
- 66: data processing unit
- 68: data storage unit
- 70: computer-readable storage medium
- 72: computer program
- 74: means for carrying out the method for providing a driving record by a vehicle

- P1: position of the first auxiliary vehicle
- P2: position of the first auxiliary vehicle
- P3: position of the first auxiliary vehicle
- P4: position of the first auxiliary vehicle
- P5: position of the first auxiliary vehicle
- P6: position of the first auxiliary vehicle
- Q 1: position of the second auxiliary vehicle
- Q2: position of the second auxiliary vehicle
- Q3: position of the second auxiliary vehicle
- Q4: position of the second auxiliary vehicle
- R1: first driving record
- R2: second driving record
- RR: request for driving record
- S 11: first step of the method for providing a driving record by a vehicle
- S12: second step of the method for providing a driving record by a vehicle
- S 13: third step of the method for providing a driving record by a vehicle
- S 14: fourth step of the method for providing a driving record by a vehicle
- S21: first step of the method for operating a vehicle being configured for driving in an autonomous driving mode
- S22: second step of the method for operating a vehicle being configured for driving in an autonomous driving mode
- S23: third step of the method for operating a vehicle being configured for driving in an autonomous driving mode
- S24: fourth step of the method for operating a vehicle being configured for driving in an autonomous driving mode
- S25: fifth step of the method for operating a vehicle being configured for driving in an autonomous driving mode
- S26: sixth step of the method for operating a vehicle being configured for driving in an autonomous driving mode
- S31: first step of the method for controlling a vehicle being subject to an interrupted autonomous drive mode
- S32: second step of the method for controlling a vehicle being subject to an interrupted autonomous drive mode
- T1: first trajectory
- T2: second trajectory
- T3: third trajectory
- U1: position of the autonomous vehicle
- U2: position of the autonomous vehicle
- U3: position of the autonomous vehicle
- U4: position of the autonomous vehicle
- U5: position of the autonomous vehicle

## Claims

1. A method for operating a vehicle (22) being configured for driving in an autonomous drive mode, the method comprising:
- receiving an autonomous drive mode interruption notification or determining an autonomous drive mode interruption event, the autonomous drive mode interruption notification or the autonomous drive mode interruption event comprising drive mode status data describing that the autonomous drive mode of the autonomous vehicle will be interrupted and at least one of interruption position data describing a position (U2) at which the autonomous drive mode will be interrupted and interruption time data describing a time at which the autonomous drive mode will be interrupted (S21),
- receiving occupancy data describing a presence or absence of a human driver in the autonomous vehicle (S22),
- requesting at least one driving record (R1, R2) from a central control entity (36), if the occupancy data describes an absence of a human driver, the driving record (R1, R2) being associated with at least one of the position (U2) described by the interruption position data and the time described by the interruption time data (S23), and
- receiving at least one driving record (R1, R2) from the central control entity (36), and
- triggering reproduction of the at least one driving record (R1, R2) when reaching the position (U2) described by the interruption position data or when reaching the time described by the interruption time data (S26).

2. The method of claim 1, wherein receiving at least one driving record (R1, R2) from the central control entity (36) comprises receiving a plurality of alternative driving records (R1, R2), all driving records (R1, R2) being associated with at least one of the position (U2) described by the interruption position data and the time described by the interruption time data (S24).

3. The method of claim 2, further comprising selecting one driving record (R1, R2) out of the plurality of alternative driving records (R1, R2) and triggering reproduction of the selected driving record (R1, R2) (S25).

4. The method of claim 3, wherein the selected driving record (R1, R2) is selected as a function of the received occupancy data.

5. The method of claim 3 or 4, wherein selecting one driving record (R1, R2) comprises selecting one or more driving records (R1, R2) which have led to an availability of the autonomous drive mode.

6. The method of any one of the preceding claims, wherein the driving record (R1, R2) comprises historic driving action data and/or historic driving characteristic data having been produced by a human driver.

7. The method of any one of the preceding claims, further comprising
- receiving an autonomous drive mode availability notification or determining an autonomous drive mode availability event, the autonomous drive mode availability notification or the autonomous drive mode availability event comprising drive mode status data describing that the autonomous drive mode of the autonomous vehicle will be available and at least one of availability position data describing a position at which the autonomous drive mode will be available and availability time data describing a time at which the autonomous drive mode will be available, and
- abandoning the method.

8. A method for controlling a vehicle (22) being subject to an interrupted autonomous drive mode, wherein the autonomous drive mode is interrupted at a position (U2) described by interruption position data or at time described by interruption time data, the method comprising:
- receiving a request (RR) for at least one driving record (R1, R2) from the vehicle (22), the driving record (R1, R2) being associated with at least one of the position (U2) described by the interruption position data and the time described by the interruption time data (S31), and
- providing at least one driving record (R1, R2) to the vehicle (S32).

9. The method of claim 8, further comprising receiving at least one driving record (R1, R2) from an auxiliary vehicle (50, 64), the driving record (R1, R2) comprising at least one of historic driving action data and historic driving characteristic data having been produced by a human driver of the auxiliary vehicle, and storing the driving record (R1, R2).

10. A method for providing a driving record (R1, R2) by a vehicle (50, 64), the method comprising
- determining whether the vehicle (50, 64) is operated by a human driver (S11),
- capturing at least one of driving action data and driving characteristic data, if the vehicle (50, 64) is operated by a human driver (S12),
- consolidating the at least one of driving action data and driving characteristic data in a driving record (R1, R2) (S13), and
- providing the driving record (R1, R2) to a central control entity (36) (S14).

11. The method of claim 10, further comprising abandoning the method after a predefined recording time, after a predefined recording distance, after receiving an autonomous drive mode availability notification or after determining an autonomous drive mode availability event.

12. A data processing apparatus (20, 34, 48, 62) comprising means (32, 46, 60, 74) for carrying out at least one of the methods of any one of the preceding claims.

13. A computer program (30, 44, 58, 72) comprising instructions which, when the computer program (30, 44, 58, 72) is executed by a computer, cause the computer to carry out at least one of the methods of claims 1 to 11.

14. A computer-readable storage medium (28, 42, 56, 70) comprising instructions which, when executed by a computer, cause the computer to carry out at least one of the methods of claims 1 to 11.

15. A traffic system (18), comprising
- a data processing apparatus (20) comprising means (32) for carrying out the method for operating a vehicle (22) being configured for driving in an autonomous drive mode according to any one of claims 1 to 7,
- a data processing apparatus (34) comprising means (46) for carrying out the method for controlling a vehicle (22) being subject to an interrupted autonomous drive mode according to any one of claims 8 and 9, and
- a data processing apparatus (48, 62) comprising means (60, 74) for carrying out the method for providing a driving record according to any one of claims 10 and 11.
